# EUROPÄISCHE PATENTSCHRIFT

(11) **EP 1 718 940 B1**
(45) Veröffentlichungstag und Bekanntmachung des Hinweises auf die Patenterteilung: **20.02.2019**
(21) Anmeldenummer: 04804846.6
(22) Anmeldetag: 15.12.2004
(51) Int. Cl.: G01J 5/00, G01S 11/12

(54) **INFRAROT-ORTUNGSGERÄT MIT MEHRFACHSENSORIK**
INFRARED LOCATING DEVICE USING MULTIPLE SENSOR TECHNOLOGY
INSTRUMENT DE LOCALISATION INFRAROUGE POSSEDANT DES DETECTEURS MULTIPLES

(30) Priorität: 14.02.2004 DE 102004007316
(43) Veröffentlichungstag der Anmeldung: 08.11.2006
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); MAHLER, Michael, 70771 Leinfelden-Echterdingen (DE); HOFFMANN, Ulli, 75223 Nieffern-Oeschelbronn (DE); KRAPF, Reiner, 72770 Reutlingen (DE); WIELAND, Christoph, 71083 Herrenberg-Kuppingen (DE)
(86) Internationale Anmeldenummer: PCT/EP2004/053493
(87) Internationale Veröffentlichungsnummer: WO 2005/080930

(56) Entgegenhaltungen:
- EP-A- 0 520 666
- EP-A2- 0 872 700
- US-A- 4 099 118
- US-A- 5 307 272
- US-A- 5 680 048
- AMAZEEN C A ET AL: "US Army's new handheld standoff mine detection system (HSTAMIDS)" THE DETECTION OF ABANDONED LAND MINES: A HUMANITARIAN IMPERATIVE SEEKING A TECHNICAL SOLUTION, EUREL INTERNATIONAL CONFERENCE ON (CONF. PUBL. NO. 431) EDINBURGH, UK 7-9 OCT. 1996, LONDON, UK,IEE, UK, 7. Oktober 1996 (1996-10-07), Seiten 172-176, XP006510335 ISBN: 0-85296-669-5

## Beschreibung

Die Erfindung betrifft ein Infrarotmessgerät, insbesondere ein handgehaltenes Messgerät, zur Ortung von in einem Medium eingeschlossenen Objekten sowie ein dem Messgerät zugrunde liegendes Verfahren nach dem Oberbegriff des Anspruchs 1 bzw. des Anspruchs 10. Ein solches Messgerät nutzt eine Infrarot-Sensorvorrichtung, die die von einem zu untersuchenden Gegenstand ausgesendete Wärmestrahlung detektiert. Ein in einem Medium eingeschlossenes Objekt wird aufgrund seiner vom umgebenden Medium unterschiedlichen thermischen Eigenschaften detektiert und somit geortet. Durch eine Auswertung des Detektionssignals im Messgerät können Informationen über das in dem Medium eingeschlossene Objekt gewonnen werden.

### Stand der Technik

Infrarotsensoren (im folgenden auch als IR-Sensoren bezeichnet) können dort vorteilhaft eingesetzt werden, wo Temperaturen oder Temperaturunterschiede gemessen werden müssen. Dies ist beispielsweise im Bereich der Sicherheitstechnik der Fall, wo sich nähernde Personen durch ihre Körperwärme von einem IR-Sensor erfasst werden und darauf beispielsweise ein Licht eingeschaltet oder ein Alarm ausgelöst wird. Auch in modernen Fieberthermometern steckt zumeist ein IR-Sensor, der über eine Messung im Ohr schnell und zuverlässig die Körpertemperatur misst.

Der Vorteil der Temperaturmessung mit IR-Sensoren liegt darin, dass selbst sehr hohe Temperaturen von über 1000 Grad zuverlässig gemessen werden können, da eine solche Messung berührungslos, lediglich auf Grund der Strahlungswärme erfolgt. Aus der EP 1 176 407 A2 ist eine solche Vorrichtung zur berührungslosen Temperaturmessung bekannt.

Interessant ist der Einsatz eines Infrarot-Messgerätes beispielsweise auch bei Szenarien wie Fußbodenheizungen, Heizungsrohren etc., d.h. bei der Vermessung von Wasserrohren, die in Böden, Wänden oder Decken eingeschlossen sind. Hier möchte man beispielsweise wissen, wo sich die Rohre befinden, um ein Anbohren der Rohre zu vermeiden bzw. bei einem bereits erfolgten Wasserrohrbruch die genaue Lage der Rohre orten.

Die Untersuchung solcher Fragestellungen wird bislang mit IR-Sensorgeräte, Wärmebildkameras oder Thermofolien durchgeführt. Mit solchen IR-Sensorgeräten des Standes der Technik wird der zu untersuchende Bereich langsam abgescannt und die lokalen Temperaturmaxima angezeichnet. Wärmebildkameras erzeugen dabei im Prinzip Fotos im Infraroten Bereich, die leichte Temperaturunterschiede sichtbar machen können. Thermofolien bestehen aus einem temperaturempfindlichen Material, das sich bei höheren Temperaturen verfärbt. Die Folien sind dabei auf den zu untersuchenden Bereich aufzukleben. Solche teilweise auch direkt bildgebenden Verfahren werden unter dem Begriff Thermographie bzw. Wärmebildaufzeichnung zusammengefasst.

Die passive als auch die aktive Thermographie zur zerstörungsfreien Bauwerksdiagnose ist beispielsweise aus dem Konferenzbeitrag "Einsatz aktiver Thermographie zur Detektion von Einschlüssen in Baukonstruktionen und im Erdreich", der im Rahmen des Termographiekolloquiums der DGZfP im Jahre 2001 in Stuttgart präsentiert wurde, bekannt.

Bei der passiven Thermographie wird lediglich die von einem zu untersuchenden Objekt ausgestrahlte, interne Wärmemenge zur Messung genutzt. Bei der aktiven Thermographie wird das zu untersuchende Objekt vor der Untersuchung aktiv, d.h. von außen, aufgeheizt und nach Abschalten der externen Heizquelle wird dann die vom Objekt ausgestrahlte Wärmemenge detektiert.

Nachteilig bei diesen Verfahren zur Thermographie ist, dass beispielsweise ein zu untersuchende Fußbodenheizung bereits Stunden vor der Messung abgeschaltet werden sollte und erst kurz vor der Messung erneut wieder gestartet werden sollte, damit der Temperaturunterschied zwischen Bereichen mit und ohne Rohren hinreichend groß ist. Darüber hinaus müssen zur aktiven Thermographie nicht unerhebliche Mengen von Strahlungsenergie erzeugt und auf das Objekt eingestrahlt werden.

Da diese Geräte nur Temperaturverteilungen anzeigen können, sind die Geräte im allgemeinen nicht sehr genau. Durch äußere Einflüsse, wie beispielsweise Zugluft, Zimmertemperatur, oder aber auch durch bauliche Besonderheiten, wie beispielsweise einer gesteigerten Wärmediffusion im Fußboden können die Messwerte verfälscht sein.

Reine IR-Sensorgeräte und vor allem Wärmebildkameras sind darüber hinaus sehr teuer, da sie sehr genau sein müssen, um wenigstens die ungefähre Lage von beispielsweise Rohren im Beton lokalisieren zu können.

Aus dem Artikel "U.S. Army's new handheld standoff mine detection system", Conferenc Publication No. 431, der Tagung IEE "Detection of abandoned land mines", 7-9 October 1996 ist ein militärisches Minendetektionssystem bekannt, bei dem eine helmgetragene, thermische Infrarotkamera zusammen mit einem "ground penetrating radar" (GPR) im Bereich vom 0,5 bis 4,2 Gigahertz betrieben wird. Der IR-Sensor benutzt dabei die militärische Version einer kommerziell erhältlichen Kamera und verwendet einen modifizierten CIMMD-Phasendetektionsalgorithmus, um dem Nutzer das Vorhandensein von nichtmetallischen und metallischen Mienen außerhalb seines Standortes anzuzeigen. Der passive IR-Sensor ermöglicht somit die Detektion von Mienen außerhalb der Standposition eines Anwenders.

Aus der EP 0 520 666 A1 ist ein Ultrabreitband-Radarsystem bekannt, welches kurze, synthetisierte Pulse verwendet. Dieses System imitiert ein breitbandiges Signal bei einem geringen Leistungsniveau.

### Vorteile der Erfindung

Das erfindungsgemäße Messgerät und das entsprechende Verfahren werden in den Ansprüchen 1 bzw. 9 beschrieben. Das erfindungsgemäße Messgerät mit einem photometrischen Sensor, insbesondere einem Infrarot-Sensor (IR-Sensor) bzw. das zugrunde liegende Verfahren zur Ortung von in einem Medium eingeschlossenen Objekten verarbeitet neben dem Messsignal des mindestens einen photometrischen Sensors mindestens ein weiteres Messsignal. Als photometrischer Sensor wird in vorteilhafter Weise ein Infrarotsensor verwendet. Der Infrarotsensor des erfindungsgemäßen Messgerätes besteht beispielsweise aus einer Halbleiterphotodiode, deren Leitfähigkeit sich mit der auftreffenden Strahlungsintensität ändert, wobei diese Photodiode spezifisch für Wellenlängen im Bereich über 1 Mikrometer (Infrarotstrahlung) empfindlich ist.

Neben dem Messsignal eines photometrischen Sensors wertet das erfindungsgemäße Verfahren zudem noch mindestens ein weiteres, zusätzliches Messsignal aus. Mittels dieses, zusätzlichen Messsignals ist es in vorteilhafter Weise möglich, zusätzliche Informationen über das eingeschlossene, zu untersuchende Objekt zu gewinnen.

In vorteilhafter Weise ermöglicht das erfindungsgemäße Verfahren damit neben einer reinen Ortung von Objekten beispielsweise auch die quantitative Bestimmung der Tiefe, in welcher ein Objekt in einem Medium eingeschlossen ist. Eine solche Information ist über einen reinen photometrischen Sensor nicht zu erzielen.

Darüber hinaus ermöglicht das beanspruchte Messgerät auch eine Identifikation des eingeschlossenen Objektmaterials. So können unterschiedliche Materialien auf einfache Weise unterschieden werden. So ist es beispielsweise möglich, zu detektieren, ob die Heizungsrohre einer Fußbodenheizung metallische Rohre sind oder - wie heutzutage häufiger verwendet - Kunststoffrohre.

Wird ein solches erfindungsgemäßes Messgerät beispielsweise vor Tiefenbohrungen in einer Wand oder einem Fußboden eingesetzt, so lässt sich neben der reinen Ortung des Objektes im voraus auch bereits eine Aussage über die "Gefährlichkeit" der im Medium eingeschlossenen Objekte treffen. So können gegebenenfalls stromführende Leitungen von Holzbalken oder dergleichen unterschieden werden.

Durch die in den abhängigen Ansprüchen aufgeführten Merkmale sind vorteilhafte Weiterbildungen des erfindungsgemäßen Verfahrens gemäß Anspruch 1 möglich.

In einer Ausführungsform des erfindungsgemäßen Messgerätes bzw. des dem Messgerät zugrunde liegenden Verfahrens wird das mindestens eine weitere Messsignal, welches zur Auswertung und Informationsgewinnung herangezogen wird, von mindestens einem weiteren Sensor erzeugt. Durch die Verwendung von getrennten Sensoren für die unterschiedlichen Detektionssignale ist es möglich die Messungen parallel durchzuführen, was nicht zuletzt eine Reduzierung der Messzeit bedeutet.

Durch eine entsprechende Schaltung wird, neben dem photometrischen Sensor des Messgerätes, der in vorteilhafter Weise als IR-Sensor ausgebildet ist, bei Bedarf auch ein weiterer Sensor, beispielsweise ein Radarsensor oder ein kapazitiver Sensor zugeschaltet. .Es lässt sich beispielsweise die Ansteuerung der Sensoren derart modulieren, dass abwechselnd, beispielsweise in schneller Folge ein Infrarotsignal oder eine Radarsignal detektiert wird("Quasi-Parallel-Betrieb").

Gemäß einem besonders vorteilhaften Ausführungsbeispiel kann mit einer entsprechenden Ansteuerungsart, die Antennenbleche des Radarsensors auch als Elektroden eines Messkondensators genutzt werden. Die Antennenanordnung des Radarsensors bzw das zugehörige Ansteuerungssignal kann derart moduliert werden, dass die Ansteuerung zwischen der Hochfrequenzanregung und der niederfrequenten Betriebsweise hin- und hergeschaltet Je nach Anregungssignal sind so beispielsweise hochfrequente kapazitive Sensoren oder aber auch gewöhnliche niederfrequente Sensoren, wie sie beispielsweise in Studfindern genutzt werden, mit lediglich einer Elektrode eines Zusatzsensors darstellbar.

Auch ist es beispielsweise möglich, die Antenne des Radarsensors erfindungsgemäß derart anzusteuern, dass sie in der Art eines Netzspannungsdetektors, der kapazitiv das Wechselspannungsfeld beispielsweise einer Netzspannungsleitung erfassen kann, arbeitet. In diesem Fall würde die Antenne passiv, d.h. ohne Erzeugung eines elektrischen Feldes, arbeiten und somit ermöglichen, die Lage und den Verlauf von Netzspannungsleitungen beispielsweise in Wänden aufzuzeigen.

Mit dem erfindungsgemäßen Verfahren ist es daher möglich unter Verwendung eines Infrarotsensors und lediglich eines Zusatzsensors, der jedoch unterschiedlich angesteuerte wird, eine Reihe unterschiedlicher Detektionssignale zu generieren, die über ihre Auswertung zusätzliche Informationen über ein eingeschlossenes Objekt dem Nutzer eines entsprechenden Messgerätes ermöglichen.

Die Verwendung von zusätzlichen Messsignalen gestattet eine genauere Ortung der eingeschlossenen Gegenstände, da der das erste Messsignal erzeugende Infrarotsensor aufgrund der Messergebnisse eines zweiten Sensors optimiert und auf die spezielle Messsituation angepasst werden kann. Beispielsweise erkennt ein kapazitiver Sensor durch die Messung der dielektrischen Impedanz eine Holzständerwand. Der im Gerät integrierter Radarsensor kann dann so betrieben werden, dass Lufteinschlüsse zwar vermessen werden, nicht jedoch in der Anzeige des Gerätes angezeigt werden. Dies kann beispielsweise dadurch erreicht werden, dass die dem Radarsensor nachgeschaltete Signalverarbeitung, die Signale der Lufteinschlüsse über gängige Mittelungsverfahren herausmittelt. Auf diese Weise lässt sich der Radarsensor optimiert betreiben.

So ist mit einem induktiven Sensor die Unterscheidung von metallischen und nichtmetallischen Objekten möglich, so dass beispielsweise eine Unterscheidung verschiedener Rohrmaterialien möglich wird. Die Vorab-Kalibierung von induktiven Sensoren kann dabei entfallen, da sie beispielsweise automatisch durchgeführt werde kann, wenn beispielsweise ein vorhandener Radarsensor erkennt, dass kein Objekt im zu untersuchenden Gegenstand vorhanden ist.

Das erfindungsgemäße Verfahren lässt es in vorteilhafter Weise auch zu, gezielt nach bestimmten Objekten zu suchen. So kann durch eine entsprechende Schaltung, die eine vordefinierte Suchroutine ansteuert, beispielsweise speziell nach elektrischen Kabeln oder Metallen gesucht werden. Zwar ist eine Detektion von stromdurchflossenen Kabeln prinzipiell auch allein mit einem Infrarotsensor möglich, jedoch wird mit einem solchen System nicht die erforderliche Genauigkeit erreicht. Durch einen Zusatzsensor können elektrische Kabel oder andere Metalle einfach und zuverlässig detektiert werden. Ebenfalls in der Wand vorhandene Hohlräume oder andere Objekte, die nicht den Suchkriterien entsprechen, können dann in vorteilhafter Weise auf der Anzeige des Messgerätes beispielsweise ausgeblendet werden, so dass ein Nutzer nur die gewünschten Informationen erhält

So ist es mit dem erfindungsgemäßen Verfahren möglich, in der Anzeige des Messgerätes beispielsweise nacheinander oder gleichzeitig Metallrohre und Kunststoffrohre, stromführende elektrische Leitungen, Kunststoffe oder auch Objekte aus Holz oder Hohlräume darzustellen. So ist es möglich, Materialdickenmessungen, wie beispielsweise Betonüberdeckungen bei Stahlbetonbauten oder Estrichdickenmessungen bei Fußbodenheizungen mit dem erfindungsgemäßen Messgerät durchzuführen. Diese Bestimmung der Materialüberdeckung ist mit herkömmlichen Inftarotmessgeräten nicht möglich.

In einer vorteilhaften Ausführungsform des erfindungsgemäßen Verfahrens werden die Detektionssignale einer ganzen Reihe von Sensoren zur Auswertung herangezogen. Bei diesen Sensoren kann es sich beispielsweise neben dem Infrarotsensor um Radarsensoren, kapazitive Sensoren, induktive Sensoren oder auch um Ultraschallsensoren handeln. Diese Sensoren werden einzeln oder in Gruppen zusammengeschaltet. Dies kann beispielsweise manuell oder auch automatisch, d.h. von einer entsprechenden Routine, welche in einem Speicherelement des Messgerätes abgelegt ist, gesteuert erfolgen.

In einer vorteilhaften Auswerteroutine des erfindungsgemäßen Verfahrens kann vorgesehen sein, die Detektionssignale aller aktiven Sensoren auszuwerten und lediglich diejenigen mit einem eindeutigen Signal exklusiv für die nachgeschaltete Datenverarbeitung zu verwenden. Die Messergebnisse der anderen Sensoren würden dabei ignoriert. Erkennt ein induktiver Sensor bei der Vermessung einer Fußbodenheizung, neben den vom Infrarotsensor ebenfalls identifizierten Wasserrohren, im Boden Metallobjekte abweichender Größe, so könnten die schwächeren Signale ausgeblendet werden, da diese mit hoher Wahescheinlichkeit aus einer im Boden vorhandenen Baustahlmatte resultieren. Erkennt der induktive Sensor jedoch nur eine Art von Metallobjekten, und auch ein Radarsensor erkennt keine zusätzlichen Objekte, so sind die vom induktiven Sensor detektierten Signale die Metallrohre der Fußbodenheizung. Erkennt ein zudätzlich vorhandener Radarsensor jedoch weitere Objekte so handelt es sich bei diesen zusätzlichen Objekten um Kunststoffrohre der Fußbodenheizung. Die Metallobjekte können dann wieder entsprechend in der Anzeige der Messergebnisse ausgeblendet werden. Auf diese Weise ist es möglich, lediglich die relevanten Informationen sichtbar zu machen.

Insbesondere ist es in vorteilhafter Weise auch möglich, einen Sensor, oder das zur Messung genutzte Detektionssignal eines Sensors durch die Auswertung und Erkenntnisse des mindestens einen weiteren Detektionssignales zu optimieren. So ist in einer Ausführungsform des erfindungsgemäßen Verfahrens vorgesehen, der Ansteuerung der einzelnen Sensoren jeweils verschiedene "Programme" einzuschreiben, beispielsweise ein "Metallprogramm", ein "Hohlziegelprogramm", ein "Kunststoffprogramm", etc. Solche speziellen Suchprogramme lassen sich einzelnen Sensoren zuschreiben, die spezielle Vorteile bei der Detektion eines solchen Objektes aufweisen. Wird bei einer Messung von einem oder mehreren Sensoren ein spezielles, einprogrammiertes Szenario erkannt, d.h. liefert ein oder mehrere Sensoren Hinweise auf beispielsweise einen speziellen Werkstoff, so werden alle Sensoren auf dieses Programm eingestellt bzw. wird die Sensoransteuerung und Auswertung auf den nunmehr bekannten Werkstoff optimiert. Auf diese Weise ist es möglich genauere Ergebnisse zu liefern, da beispielsweise mit optimal auf das identifizierte Objekt abgestimmten Empfindlichkeiten der einzelnen Sensoren gearbeitet werden kann.

In einer weiteren Ausführungsform eines erfindungsgemäßen Messgerätes sind mehrere Sensoren in einem gemeinsamen Gehäuse des Messgerätes integriert. Die Sensoren können dabei beispielsweise auf einer gemeinsamen Leiterplatte angeordnet sein. Vorteilhaft ist es beispielsweise die Sensoren alle auf eine gemeinsame Achse hin auszurichten, so dass die entsprechenden Detektionssignale auf ein und denselben Punkt gerichtet sind.

Besitzt das Gerät eine Wegsensorik, so können nicht nur die aktuellen Signalpegel der verschiedenen Sensoren gemessen werden, sondern es können darüber hinaus auch Signalverläufe erfasst und dargestellt werden. Dadurch wird auch eine zwei dimensionale Darstellung im Display des Messgerätes möglich, bei der neben einer Weginformation auch eine Tiefeninformation dargestellt wird. Dies unterscheidet sich in vorteilhafter Weise von Infrarotortungsgeräten des Standes der Technik, bei denen zumeist über eine Falschfarbendarstellung das aktuelle Messergebnis am Ort der Messung angezeigt wird. So kann mit dem erfindungsgemäßen Messgerät beispielsweise bei einer Fußbodenheizung neben der Materialart der Rohre, deren Größe und Tiefe im Boden, sowie über das unterschiedliche Temperaturniveau auch die Flussrichtung detektiert und angezeigt werden.

In alternativen Ausführungsformen des erfindungsgemäßem Messgerätes ist es aber auch möglich, die Sensoren teilweise auf einer gemeinsamen Platine und teilweise an anderen Stellen im Gehäuse des Messgerätes beispielsweise in einem Gehäuseboden des Gerätes zu integrieren.

Eine besonders vorteilhafte Ausgestaltung des Messgerätes ergibt sich bei Verwendung von externen Sensoren, die mittels eines Ansteckmoduls und einer entsprechenden Schnittstelle mit dem Messgerät und den darin vorhandenen Sensoren verkoppelt werden können.

Beispielsweise kann auch vorgesehen sein, eine ganze Reihe unterschiedlicher Sensoren im Messgerät bei der Fertigung dieses Gerätes zu integrieren und diese Sensoren einzeln oder Gruppenweise über eine entsprechende Software zu ihrer Ansteuerung frei zu geben. Auf diese Weise ist es möglich, mit einem Serienprodukt unterschiedlichen Anforderungen verschiedener Nutzer Rechnung zu tragen.

Das erfindungsgemäße Infrarotmessgerät ist somit als ein kostensparendes, kompaktes Multifunktionsgerät ausgebildet, das in vorteilhafter Weise einen einfachen, handgehaltenen Betrieb gestattet, indem der Nutzer das Messgerät beispielsweise auf einer zu untersuchenden Wand verfährt. Die Messergebnisse werden ihm in einer intuitiv leicht zugänglichen graphischen Darstellung direkt auf einer Anzeige des Messgerätes mitgeteilt, so dass er einen unmittelbaren Blick in die zu untersuchende Wand werfen kann und somit beispielsweise entscheiden kann, an welcher Stelle der Wand eine Bohrung ungefährlich ist.

Weitere Vorteile des erfindungsgemäßen Verfahrens zur Ortung von in einem Medium eingeschlossenen Objekten bzw. eines entsprechenden Messgerätes sind in der nachfolgenden Zeichnung sowie in der zugehörigen Beschreibung offenbart.

### Zeichnung

In der Zeichnung sind Ausführungsbeispiele des erfindungsgemäßen Infrarotortungsgerätes bzw. des zu Grunde liegenden Verfahrens zur Ortung von in einem Medium eingeschlossenen Objekten dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die hiermit als ebenfalls in diesem Text offenbart anzusehen sind.

Es zeigt:
- Figur 1: den schematischen Aufbau eines erfindungsgemäßen Messgeräts,
- Figur 2: einen Schnitt durch die Sensorvorrichtung eines ersten Ausführungsbeispiels des erfindungsgemäßen Messgerätes,
- Figur 3: das Ausführungsbeispiel des erfindungsgemäßen Messgerätes gemäß Figur 2 in einer schematisierten Unteransicht,
- Figur 4: ein weiteres Ausführungsbeispiel des erfindungsgemäßen Messgerätes in einer schematisierten Unteransicht,

### Beschreibung der Ausführungsbeispiele

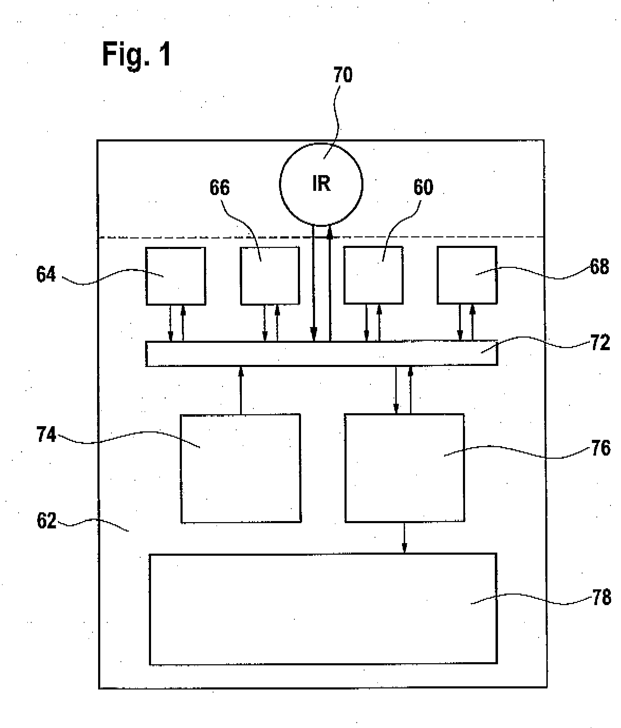

Figur 1 zeigt in einer schematischen Darstellung das der Erfindung zu Grunde liegende Verfahren bzw. den prinzipiellen Aufbau eines photometrischen Messgerätes für das erfindungsgemäße Verfahren. Neben einem Infrarotsensor 70 weist das erfindungsgemäße Messgerät 62 nach dem Ausführungsbeispiel der Figur 1 einen induktiven Sensor 64, einen kapazitiven Sensor 66, einen kapazitiven Hochfrequenzsensor 68 sowie einen Radarsensor 60 auf. Der Infrarotsensor 70 stellt dabei einen vorteilhaften photometrischen Sensors 92 dar. Weitere Sensoren können in entsprechenden Ausführungsbeispielen vorhanden sein.

Während der Infrarotsensor bei einer Messung eine Grobklassifikation durchführen kann, die beispielsweise eine erste Aussage über beheizte, unbeheizte oder gekühlte Rohrleitungen ermöglicht, sowie den ungefahren Verlauf dieser Rohre sichtbar machen kann, können durch die weiteren, im Messgerät vorhandenen Sensoren genauere Aussagen über die exakte Lage, Tiefe und Größe der eingeschlossenen Objekte gewonnen werden. Im Rahmen dieser Beschreibung mögen die zitierten Rohrleitungen einer Fußboden- oder Wandheizung als anschauliches Beispiel für die Darstellung der Funktionsweise des erfindungsgemäßen Messgerätes dienen. Der Bezug auf diese Rohrleitungen stellt jedoch keinerlei Einschränkung dar, da das erfindungsgemäße Messgerät, sowie das dem Messgerät zugrundeliegende erfindungsgemäße Verfahren der Ortung von beliebigen, in einem Medium eingeschlossenen Objekten dient.

Durch eine zentrale Steuereinheit 72 des erfindungsgemäßen Messgerätes werden die einzelnen Sensoren, wie in Figur 1 dargestellt, angesteuert und ausgewertet. Bei dem erfindungsgemäßen Verfahren können die Sensoren sowohl einzeln, als auch in Gruppen bzw. alle zusammen geschaltet werden. Die Wahl der Betriebsart, d.h. die Auswahl, welche Sensoren für eine bestimmte Messung genutzt werden sollen, kann zum einen über einen manuellen Betriebswahlschalter 74 erfolgen, der in einem Bedienfeld, beispielsweise einem Tastenfeld oder einem Programmenue des Messgerätes integriert ist und von einem Nutzer nach seiner Wahl betätigt werden kann.

Neben dieser manuellen Auswahl der Betriebsart durch den Benutzer ist auch eine automatische Betriebsartauswahl ("automatischer Betrieb") über ein entsprechendes Steuerprogramm möglich, welches in einem Speichermedium des Messgerätes abgelegt sein kann.

Das erfindungsgemäße Verfahren ermöglicht es, die verschiedenen Sensoren sowohl parallel, quasi-parallel, als auch seriell zu nutzen. Dabei wird bei der quasi-parallelen Betriebsart sehr schnell zwischen einzelnen Sensoren umgeschaltet und die entsprechenden Detektionssignale generiert, gemessen und ausgewertet, bzw. zur Auswertung gegebenenfalls zwischengespeichert. Hier kann ebenfalls zwischen einer automatischen und einer vom Benutzer vorgegebenen Auswahl der Sensoren gewählt werden.

Durch eine entsprechende Auswerteeinheit 76 werden die einzelnen Mess-Signale der Sensoren ausgewertet, miteinander verglichen und daraufhin beispielsweise einzelne Sensoren in Abhängigkeit der Messergebnisse anderer Sensoren optimiert. So ist in einer Ausführungsform des erfindungsgemäßen Verfahrens vorgesehen, der Ansteuerung der einzelnen Sensoren jeweils verschiedene "Programme" einzuschreiben, beispielsweise ein "Metallprogramm", ein "Hohlziegelprogramm", ein "Kunststoffprogramm", etc. Solche speziellen Suchprogramme lassen sich den einzelnen Sensoren zuordnen. Wird bei einer Messung von einem oder mehreren Sensoren ein spezielles, einprogrammiertes Szenario erkannt, d.h. liefern einige Sensoren Hinweise auf beispielsweise einen speziellen Werkstoff, so werden alle Sensoren auf dieses Programm umgestellt und liefern somit genauere, optimierte Messergebnisse, da beispielsweise mit optimal abgestimmten Empfindlichkeiten der einzelnen Sensoren gearbeitet werden kann.

In einer vorteilhaften Auswerteroutine des erfindungsgemäßen Verfahrens kann vorgesehen sein, die Detektionssignale aller aktiven Sensoren auszuwerten und lediglich diejenigen mit einem eindeutigen Signal exklusiv für die nachgeschaltete Datenverarbeitung zu verwenden. Die Messergebnisse der anderen Sensoren werden dabei für die weitere Auswertung ignoriert.

Der Auswerteeinheit 76 ist eine Einheit zur Datenverarbeitung und eine Anzeige 78 nachgeschaltet Die Daten der Auswerteeinheit 76 werden aufgearbeitet und in eine für den Nutzer intuitiv zugängliche Darstellungsweise überführt. So kann das Messergebnis beispielsweise in Form einer graphischen Darstellung der aktuellen Messsituation ausgearbeitet werden. Über eine im Messgerät integrierte Anzeige wird das Mess-Signal, insbesondere in Echtzeit, dem Nutzer beispielsweise in der Art eine Schnittdarstellung durch die untersuchte Wand übermittelt.

Es kann bei der Datenverarbeitung beispielsweise vorgesehen sein, alle Sensorsignale mittels Hauptkomponentenanalyse neuronaler Netze auszuwerten und über eine Mustererkennung das wahrscheinlichste Ergebnis über die Anzeige auszugeben. Auch kann eine entsprechende Routine vorgesehen sein, die jeden Sensor entsprechend seiner Detektionsgrenzen gewichtet in das Ergebnis eingehen lässt. Dies ermöglicht, obwohl jeder einzelne Sensor für sich festgelegte Grenzen der Detektion aufweist, ein Gesamtergebnis mit "weichen" Grenzen. Hier ist beispielsweise der Einsatz einer Fuzzy Logik vorteilhaft.

Die für das Verfahren vorgesehenen, einzelnen Sensoren können allesamt in einem Gehäuse des Messgerätes integriert sein bzw. ist es auch möglich, spezielle adaptive Varianten des erfindungsgemäßen Messgerätes zu realisieren. Dabei könnten Zusatzdetektoren, wie beispielsweise der induktive Sensor 64, auf das Messgerät 62 mit Infrarotsensor 70, Radarsensor 60, kapazitivem Hochfrequenzdetektor 68 modular aufgesetzt werden. Über eine gemeinsame Schnittstelle kann dann die Ansteuerung und Auswertung auch des induktiven Sensors 64 über das eigentliche Messgerät 62 erfolgen.

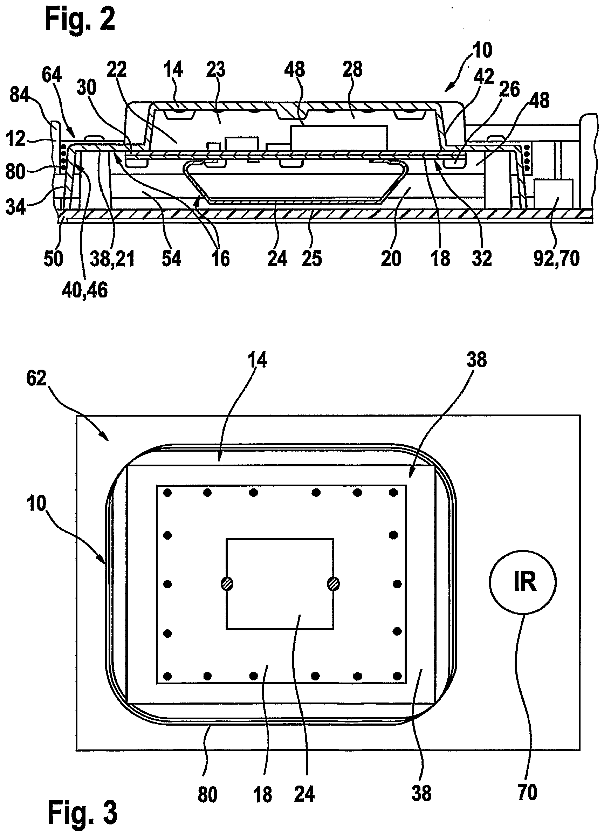

Figur 2 zeigt einen Schnitt durch das Frontend, d.h. durch den Sensorkopf 10 eines erfindungsgemäßen Messgerätes. Das Messgerät 62, welches in dem Ausführungsbeispiel der Figur 2 nur ausschnittsweise dargestellt ist, weist einen Infrarotsensor 70 als photometrischen Sensor 92, sowie einen Radarsensor 60 und einen induktiven Sensor 64 in Form einer Spule auf.

Die Sensorvorrichtung 10 besitzt ein Gehäuse 14 mit einer leitfähigen Oberfläche. Das Gehäuse 14 lässt sich beispielsweise aus einem Metall als einstückiges Druckgussteil oder aber auch durch einen Formgebungsprozess aus metallisiertem Kunststoff realisieren. Ebenfalls sind metallisch leitende Beschichtungen für das Gehäuse 14 der Sensorvorrichtung möglich. Das Gehäuse des Sensors ist einseitig in Richtung eines Messobjektes offen, umschließt wesentliche Komponenten der Sensorvorrichtung und ist selbst integraler Bestandteil dieser Sensorvorrichtung.

Die Sensorvorrichtung 10 weist im Wesentlichen vier Bauteilgruppen auf. Die erste Gruppe dieser Bauteile sind elektrische Schaltkreise 48 zur Erzeugung und Verarbeitung der Mess- bzw. Detektionssignale. Die zweite Baugruppe der Sensorvorrichtung umfasst einen Radarsensor 60, der im erfindungsgemäßen Ortungsgerät durch eine speziell gestaltete Antenne 16 realisiert ist. Um das Gehäuse 14 der Sensorvorrichtung herum ist als dritte Baugruppe eine Spulenanordnung 12 vorgesehen, die zusammen mit entsprechenden elektronischen Schaltkreisen und Bauelementen 48 einen induktiven Sensor 64 zur Detektion insbesondere metallischer Gegenstände bildet. Die vierte Bauteilgruppe wird durch einen Infrarotmesskopf 69 mit seinem Sensor 70 gebildet.

Die genannten vier unterschiedlichen Baugruppen sind in unterschiedlichen, voneinander getrennten Teilräumen des Sensorkopfes 10 angeordnet. Während die Spulenanordnung 12 des induktiven Sensors 64 außerhalb des Gehäuses 14 verläuft, sind die elektrischen Schaltkreise 48 sowie die Antenne des Radarsensors 60 innerhalb des Gehäuses angeordnet, jedoch durch eine Leiterplatte 18 voneinander getrennt. Der Infrarotmesskopf 69 ist im Ausführungsbeispiel der Figur 2 außerhalb des Gehäuses 14 in der Nähe des induktiven Sensors angeordnet. Insbesondere ist eine Trennung des Infrarotsensorkopfes von der Leistungselektronik vorteilhaft, da die Verlustwärme der elektronischen Bauelemente zu einer Verfälschung eines Messergebnisses führen könnte. Der Infrarotsenor ist über entsprechende Verbindungmittel elektrisch an die Engergieversorgung und die Ansteuerungselektronik angekoppelt.

Die Leiterplatte 18 ist im Gehäuse 14 an ihren Rändern mit dem Gehäuse 14 fixiert. Das Gehäuse besitzt dazu in dem Ausführungsbeispiel nach Figur 2 eine charakteristische Schulter 42, auf die die Leiterplatte 18 aufgelegt ist. Das derart geformte Gehäuse 14 wird so in einem nicht weiter dargestellten Gehäuse des Messgerätes eingebaut, dass die beiden Teilräume für Elektronik bzw. Radarsensor übereinander angeordnet sind. Die Teilräume 20 und 22 sind durch die Leiterplatte 18 derart voneinander getrennt, dass ein erster offener Teilraum 20 für den Radar-Sensor und ein zweiter geschlossener Teilraum 22 für die Elektronikkomponenten gebildet wird. Der zweite Teilraum 22 wird gebildet durch eine Ausbuchtung 28 des Gehäuses 14 sowie durch die Leiterplatte 18, die fest mit dem Gehäuse verbunden ist. In vorteilhafter Weise ist eine metallisierte Schicht 30 auf bzw. in der Leiterplatte 18 integriert, so dass der Teilraum 22 des Gehäuses 14 von einer elektrisch leitenden Oberfläche eingeschlossen ist. Auf diese Weise bildet der Teilraum 22 einen "Faraday'schen Käfig" 23, der es ermöglicht, die im Teilraum 22 angeordneten elektronischen Bauelemente gegen elektromagnetische Störungen zu isolieren. Auf diese Weise sind die elektronischen Bauelemente ihrerseits von den Sensoren entkoppelt und führen somit zu keiner negativen Wechselwirkung mit diesen.

Die Leiterplatte 18 trägt, wie in Figur 2 zu erkennen ist, auf ihrer einen Seite die elektrischen Schaltkreise und Bauelemente 48 zur Erzeugung und Auswertung der Mess-Signale. Durch entsprechende Verbindungsmittel sind die einzelnen Sensoren mit den elektronischen Bauteilen 48 im zweiten Teilraum verbunden. Auf der anderen Seite der Leiterplatte 18 ist ein Antennenblech 24 des Antenne 16 befestigt.

Der erste Teilraum 20 des Gehäuses 14 der Sensorvorrichtung 10, in welchem der Radarsensor 60 untergebracht ist, wird im Wesentlichen gebildet durch die Oberfläche 32 der Leiterplatte 18 sowie durch Seitenwände 34 des Gehäuses 14. In die Seitenwände 34 sind Aussparungen 36 integriert, die es ermöglichen, das Gehäuse 14 der Sensorvorrichtung in das Gehäuse des Messgerätes zu verankern.

Der erste Teilraum 20 des Gehäuses 14 ist einseitig durch eine Öffnung 54 geöffnet und trägt im Wesentlichen die Antenne 16 des Radarsensors 60. Die Antenne wird gebildet durch das auf der Leiterplatte 18 befestigte Antennenblech 24 sowie die Innenfläche 38 des Teilraumes 20 des Gehäuses 14, welche die Masseelektrode 21 der Antennenanordnung bildet. Auf diese Weise ist es möglich, die Antenne 16 sehr kompakt zu gestalten.

Der erste Teilraum 20 kann, wie im Ausführungsbeispiel der Figur 2 dargestellt, durch eine Wand 50 des zugehörigen Messgerätes 62 in der Art eines Radon verschlossen sein, so lange diese Abschottung kein Hindernis für das elektrische Feld der Antennenanordnung 16 darstellt. Aus diesem Grunde kann die Wand 50 beispielsweise durch eine Seite eines Kunststoffgehäuses des erfindungsgemäßen Messgerätes 62 realisiert werden. Der Infrarotsensor 70 kann gegebenenfalls ebenfalls durch diese Gehäusewand des Messgerätes geschützt sein. Die Wand 50 dient neben dem Schutz des Infrarotmesskopfes zudem dem mechanischen Schutz des Antennenblechs 24 des Radarsensors 16 vor Beschädigungen.

Das erfindungsgemäße Messgerät 62 würde in diesem Fall mit der Gehäusewand 50 über die zu vermessende Struktur, beispielsweise eine Decke oder einen Boden, geführt werden. Dazu können Rollen oder andere Wälzkörper am Messgerät vorgesehen sein, mit denen das Messgerät beispielsweise über eine Wand verfahren werden kann. Das erfindungsgemäße Messgerät besitzt eine Wegsensorik, so dass die mit dem Messgerät auf einer Wand oder ähnlichem zurückgelegte Strecke gemessen wird. Auf diese Weise ist es möglich, nicht nur die aktuellen Signalpegel der verschiedenen Sensoren zu messen, sondern es können darüber hinaus auch Signalverläufe erfasst und dargestellt werden, indem jedem Messwert eines Sensors eine Ortskoordinate zugeordnet wird. Dadurch wird auch eine 2-dim Darstellung im Display des Messgerätes möglich, bei der neben einer Weginformation auch eine Tiefeninformation dargestellt wird. Dies unterscheidet sich in vorteilhafter Weise von Infrarotmessgeräten des Standes der Technik, bei denen zumeist über eine oder mehrere optische Signallampen lediglich das aktuelle Messergebnis am aktuellen Ort der Messung angezeigt wird.

Um das Gehäuse 14 der Sensorvorrichtung10 herum gewickelt sind die Spulenelemente 80 der Spulenanordnung 12 eines im erfindungsgemäßen Messgerätes induktiven Sensors 64. Die Spulenelemente 80 können dabei beispielsweise auf einen Spulenträger 84 ist es möglich, nicht nur die aktuellen Signalpegel der verschiedenen Sensoren zu messen, sondern es können darüber hinaus auch Signalverläufe erfasst und dargestellt werden, indem jedem Messwert eines Sensors eine Ortskoordinate zugeordnet wird. Dadurch wird auch eine 2-dim Darstellung im Display des Messgerätes möglich, bei der neben einer Weginformation auch eine Tiefeninformation dargestellt wird. Dies unterscheidet sich in vorteilhafter Weise von Infrarotmessgeräten des Standes der Technik, bei denen zumeist über eine oder mehrere optische Signallampen lediglich das aktuelle Messergebnis am aktuellen Ort der Messung angezeigt wird.

Um das Gehäuse 14 der Sensorvorrichtung10 herum gewickelt sind die Spulenelemente 80 der Spulenanordnung 12 eines im erfindungsgemäßen Messgerätes induktiven Sensors 64. Die Spulenelemente 80 können dabei beispielsweise auf einen Spulenträger 84 aufgebracht bzw. in diesem vergossen sein. Über entsprechende Verbindungsmittel sind die Spulenelemente 80 mit einer nicht weiter dargestellten Energieversorgung sowie den elektronischen Bauelementen 48 zur Ansteuerung und Auswertung verbunden. Auch ist es in anderen Ausführungsformen möglich, beispielsweise die induktive Sensorvorrichtung auch in den Kunststoffboden 50 des Messgerätes 62 zu integrieren. Der Infrarotsensor 70 kann sich auch innerhalb des Gehäuses 14, beispielsweise auf der Sensorplatine 18, befinden. Wegen der gegenseitigen Beeinflussung der Sensoren ist es jedoch typischerweise besser, ihn, wie in Figur 2 dargestellt, außerhalb des Gehäuses zu platzieren.

In verschiedenen Ausführungsbeispielen des erfindungsgemäßen Messgerätes kann die Art der Integration der verwendeten Sensorprinzipien beliebig realisiert werden. Die Lage, Größe, sowie die Anzahl der Sensoren ist nicht beschränkt. Die aus den zusätzlichen Detektionssignalen gewonnenen Daten können gewinnbringend lässt sich beispielsweise die Ansteuerung der Antenne 16 derart modulieren, dass sie zwischen der Hochfrequenzanregung und der niederfrequenten Betriebsweise hin- und hergeschaltet wird. Auch ist es beispielsweise möglich, die Antennenanordnung 16 des erfindungsgemäßen Ortungsgerätes gemäß Figur 2 bzw. Figur 3 derart anzusteuern, dass er in Art eines Netzspannungsdetektors 65, der kapazitiv das Wechselspannungsfeld beispielsweise einer Netzspannungsleitung erfassen kann, betrieben wird. In diesem Fall würde der Sensor passiv, d.h. ohne Erzeugung eines elektrischen Feldes, arbeiten und somit ermöglichen, die Lage und den Verlauf von Netzspannungsleitungen beispielsweise in Wänden aufzuzeigen.

Durch die Ansteuerelektronik, die im erfindungsgemäßen Messgerät vorgesehen ist, wird ermöglicht, dass mit lediglich einem Sensor, im Ausführungsbeispiel der Figur 2 oder 3 mit der Antennenanordnung 16 des Radarsensors 60, verschiedene zusätzliche Mess- bzw. Detektionssignale erzeugt werden. Diese Messsignale können dann quasi-parallel oder auch seriell ausgewertet werden, so dass über die Auswertung zusätzliche Informationen über das in einem Medium eingeschlossene, zu vermessene Objekt gewonnen werden können. Der Radarsensor 60 kann dabei als kapazitiver Sensors, insbesondere als konventioneller, d.h. niederfrequenter kapazitiver Sensor 66, als Netzspannungsdetektor 65, oder aber auch als Hochfrequenzdetektor 68, angesteuert werden. In vorteilhafter Weise sind dabei die Detektionssignale automatisch auf ein und denselben Punkt auf der zu untersuchende Fläche ausgerichtet. Es wird somit immer, d.h. auch bei einem Umschalten des Detektionssignals, das selbe Messgebiet untersucht. Ein Messfehler durch Vermessung unterschiedlicher räumlicher Gebiete wird in diesem Ausführungsbeispiel eines erfindungsgemäßen Messgerätes nahezu ausgeschlossen. Auf diese Weise ist es möglich das erfindungsgemäße Infrarotmessgerät mit einer Vielzahl an Zusatzsensoik auszustatten, ohne das der dazu benötigte Bauraum des Messgerätes in nicht mehr zu vertretendem Maße wächst. Trotz der Vielzahl der unterschiedlichen Detektionssignale, die mit dem erfindungsgemäßen Gerät möglich sind, lässt sich dieses als kompaktes handgehaltenes Messgerät ausbilden.

In einem alternativen Ausführungsbeispiel ist es möglich, den unterschiedlichen Detektionssignalen auch jeweils einen eigenständigen Sensor, beispielsweise jeweils eine Antenne und einen Messkondensator zuzuordnen, so dass der rein parallele Betrieb der Zusatzsensorik zur Gewinnung mehrerer Detektionssignale auf Kosten eines dann etwas größeren Bauraumes ermöglicht wird. Der Infrarotsender würde dabei seriell oder quasiparallel zu den Zusatzsensoren betrieben.

Das erfindungsgemäße Verfahren lässt es in vorteilhafter Weise auch zu, gezielt nach bestimmten Objekten zu suchen. So kann durch eine entsprechende Schaltung, die eine vordefinierte Suchroutine ansteuert, beispielsweise speziell nach warmen oder heißen Wasserrohren gesucht werden. Ebenfalls in der Wand vorhandene Hohlräume, die mittels ds IR-Sensors, wenn überhaupt, dann nur sehr schwerlich zu detektieren sind, können dabei durch die Zusatzsensoren, beispielsweise den Radarsensor detektiert und auf der Anzeige des Messgerätes automatisch oder vom Nutzer vorgegeben eingeblendet oder auch wieder ausgeblendet werden, so dass ein Nutzer nur die gewünschten Informationen selektiv darstellen kann.

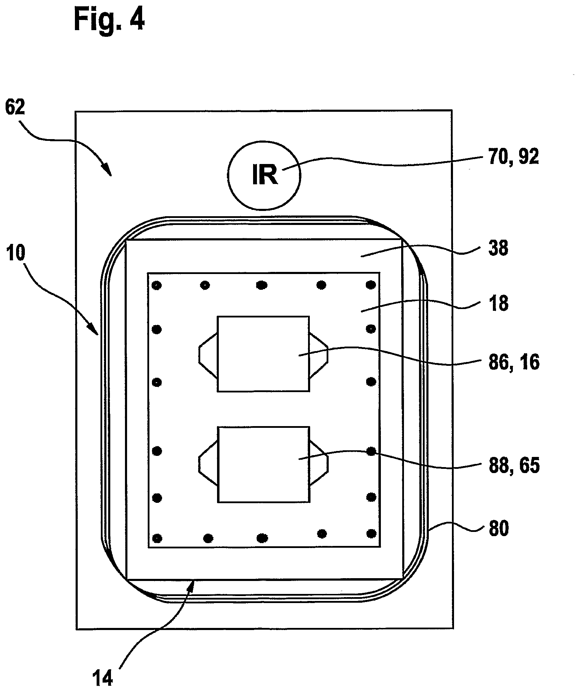

Figur 4 zeigt eine Sensorvorrichtung 10, in einer schematisierten Unteransicht, wobei die Antennenanordnung des Radarsensors 60 über eine Sendeantenne 86 und eine von der Sendeantenne getrennte Empfangsantenne 88 verfügt, die auf die Sensorplatine 18 aufgelötet sind. Die Antennen werden zusätzlich zur Radarerfassung mittels einer entsprechenden elektronischen Verschaltung auch als kapazitiver Hochfrequenzsensor 68 bzw. Kapazitätssensor 65, 66 verwendet. Eine intelligente Software oder entsprechende Elektronik schaltet dazu zwischen den einzelnen Betriebsarten dieser Sensoren sehr schnell um. Um das Gehäuse 14 ist zudem eine Spulenanordnung 80 zur induktiven Detektion gewickelt. Wahlweise kann ein Ferrit für die Spule vorgesehen sein. Art, Größe und Lage der Spulenwicklungen können speziell ausgeformt sein.

Der Infrarotsensor 70 kann sich auch innerhalb des Gehäuses 14, beispielsweise auf der Sensorplatine 18, befinden. Wegen der gegenseitigen Beeinflussung der Sensoren ist es jedoch, wie bereits erwähnt, typischerweise besser, ihn außerhalb des Gehäuses zu platzieren. In verschiedenen Ausführungsbeispielen des erfindungsgemäßen Messgerätes kann die Art der Integration der verwendeten Sensorprinzipien beliebig realisiert werden. Die Lage, Größe, sowie die Anzahl der Sensoren ist nicht beschränkt. Die aus den zusätzlichen Detektionssignalen gewonnenen Daten können gewinnbringend weiterverarbeitet werden und so zu zusätzlichen Informationen über das eingeschlossene Objekt führen.

Durch eine entsprechende Datenverarbeitung (Software) können sich die Messergebnisse der einzelnen Sensoren gegenseitig ergänzen und somit zu einem möglichst vollständigen Bild über den eingeschlossenen Gegenstand führen.

Das erfindungsgemäße Infrarotmessgerät ermöglicht im Gegensatz zu Infrarotgeräten des Standes der Technik durch die Kombination mehrerer Sensorprinzipien beispielsweise eine schnelle und leistungsfähige Ortung und Vermessung von beheizten oder gekühlten Rohren in Wänden, Decken oder Böden. Während der IR-Sensor die Grobklassifikation, d.h. eine Unterscheidung beheizte oder gekühlte Rohre, sowie eine Ortung der ungefähren Lage der Rohre vornehmen kann, können durch die weiteren, im erfindungsgemäßen Messgerät integrierten Sensorprinzipien auch die exakte Lage, Tiefe und Größe der Rohre bestimmt werden.

Die Auswertung mehrerer Detektionssignale, die aus einer Kombination mehrerer Sensoren oder aus einer unterschiedlichen Ansteuerung ein und desselben Sensors gewonnen werden können, ermöglicht es in vorteilhafter Weise, zusätzlich zur Ortung des eingeschlossenen Gegenstandes, beispielsweise auch eine Materialidentifikation sowie bei Elektroleitungen beispielsweise auch Informationen über den Spannungszustand der Leitungen zu gewinnen. Die Anwendungbereiche eines Infrarotortungsgerätes wird aufgrund der Zusatzsensorik deutlich erweitert.

Mit dem erfindungsgemäßen Verfahren ist möglich, einen Sensor auf Grund der durch die anderen Sensoren gewonnenen Informationen über den eingeschlossenen Gegenstand zu optimieren. Auf diese Weise ist es möglich, dass jede Sensoreinheit für sich genommen aufgrund der Zusatzinformationen der anderen Sensoren besser arbeitet. Diese optimierten, voneinander unabhängigen Ergebnisse können Software- oder auch hardwaremäßig so zusammengefügt werden, dass das erfindungsgemäße Ortungsgerät dem Nutzer sowohl Lage, Tiefe, Breite, als auch beispielsweise Materialart und Temperatur, selbst in großen Objekttiefen mitteilen kann.

Das erfindungsgemäße Messgerät mit einem photometrischen Sensor ist somit als ein kostensparendes, kompaktes Multifunktionsgerät ausgebildet, das in vorteilhafter Weise einen einfachen, handgehaltenen Betrieb gestattet. Der Nutzer verfährt das Messgerät dazu beispielsweise auf einer zu untersuchenden Wand. Die Messergebnisse werden ihm in einer intuitiv leicht zugänglichen, graphischen Darstellung direkt auf einer Anzeige des Messgerätes mitgeteilt, so dass er auf diese Weise einen "unmittelbaren Blick in die zu untersuchende Wand" werfen kann. Er kann somit beispielsweise entscheiden, an welcher Stelle der Wand eine Bohrung nicht durchgeführt werden sollte bzw. an welcher Stelle eine solche Bohrung ungefährlich ist.

Das erfindungsgemäße Ortungsgerät bzw. das zu Grunde liegende erfindungsgemäße Verfahren zur Ortung von in einem Medium eingeschlossenen Objekten ist nicht auf die in den Figuren gezeigten Ausführungsbeispiele beschränkt.

Insbesondere ist das erfindungsgemäße Verfahren nicht beschränkt auf die Detektion von in Wänden, Böden oder Decken eingeschlossenen Objekten.

## Patentansprüche

1. Handgehaltenes photometrisches Messgerät, zur Ortung von in einem Medium eingeschlossenen Objekten, mit zumindest einem, in einem Gehäuse des Messgerates integrierten, photometrischer Sensor (92,70), das ein erstes Messsignal des zu untersuchenden Gegenstandes mittels des mindestens einen photometrischen Sensors (92,70) gewinnt, so dass durch die Auswertung dieses Messsignals Informationen über ein in dem Medium eingeschlossenes Objekt gewonnen werden, **dadurch gekennzeichnet, dass** mindestens ein weiterer Sensor (64,66,68,) zur Erzeugung mindestens eines weiteren, zweiten Messsignals zur Gewinnung von Informationen über das in dem Medium eingeschlossene Objekt in dem Gehäuse des Messgerätes vorgesehen ist, wobei es eine Wegsensorik des Messgerätes ermöglicht, Signalverläufe von Messsignalen zu erfassen und 2-dim Darstellungen, bei denen neben einer Weginformation auch eine Tiefeninformation dargestellt wird, in einem Display des Messgerätes wiederzugeben.

2. Messgerät nach Anspruch 1, **dadurch gekennzeichnet, dass** der mindestens eine photometrischer Sensor (92,70) ein Infrarot-Sensor (70) ist.

3. Messgerät nach Anspruch 1 oder 2, **dadurch gekennzeichnet, dass** der mindestens eine weitere Sensor ein Radar-Sensor (60) ist.

4. Messgerät nach Anspruch 3, **dadurch gekennzeichnet, dass** der Radar-Sensor (60) ein breitbandiger Sensor eines Impuls-Radars ist.

5. Messgerät nach Anspruch 1 oder 2, **dadurch gekennzeichnet, dass** der mindestens eine weitere Sensor ein induktiver Sensor (64) ist.

6. Messgerät nach Anspruch 1 oder 2, **dadurch gekennzeichnet, dass** der mindestens ein weitere Sensor ein kapazitiver Sensor (65,66,68) ist.

7. Messgerät nach Anspruch 6, **dadurch gekennzeichnet, dass** der mindestens eine weitere kapazitive Sensor (65,66,68) ein kapazitiver Hochfrequenzsensor ist (68), der durch Messung einer Impedanz seiner Elektroden Informationen über in dem Medium eingeschlossene Objekte gewinnt.

8. Messgerät nach Anspruch 1, **dadurch gekennzeichnet, dass** mindestens zwei der Sensoren (60,64,66,68,70,92) auf einer gemeinsamen Leiterplatte (18) angeordnet sind.

9. Verfahren zur Ortung von in einem Medium eingeschlossenen Objekten mit dem Messgerät des Anspruchs 1, bei welchem mittels zumindest eines photometrischen Sensors (92,70), insbesondere eines Infrarotsensors (70), ein Messsignal generiert wird, so dass durch Auswertung dieses ersten Messsignals, Informationen über ein in dem Medium eingeschlossenes Objekt gewonnen werden, und mindestens ein weiteres, zweites Messsignal zur Gewinnung von Informationen über das in dem Medium eingeschlossene Objekt ausgewertet wird, **dadurch gekennzeichnet, dass** zur Gewinnung von Informationen über das in dem Medium eingeschlossene Objekt das Messsignal einer Wegsensorik ausgewertet wird, um Signalverläufe von Messignalen zu erfassen und 2-dim Darstellungen, bei denen neben einer Weginformation auch eine Tiefinformation dargestellt wird, wiederzugeben.

10. Verfahren nach Anspruch 9, **dadurch gekennzeichnet, dass** das mindestens eine weitere Messsignal von mindestens einer weiteren Sensorvorrichtung (64,65 66,68) erzeugt wird.

11. Verfahren nach Anspruch 9 oder 10, **dadurch gekennzeichnet, dass** das mindestens eine erste Messsignal und das mindestens eine zweite Messsignal parallel gemessen werden.

12. Verfahren nach Anspruch 9 oder 10, **dadurch gekennzeichnet, dass** das mindestens eine erste Messsignal und das mindestens eine zweite Messsignal quasi-parallel gemessen werden.

13. Verfahren nach Anspruch 9 oder 10, **dadurch gekennzeichnet, dass** das mindestens eine erste Messsignal und das mindestens eine zweite Messsignal seriell gemessen werden.

14. Verfahren nach einem der vorhergehenden Ansprüche 9 bis 13, insbesondere nach Anspruch 9, **dadurch gekennzeichnet, dass** die Messsignale einer Mehrzahl von Sensoren (64,65 66,68) gemessen und ausgewertet werden, wobei die Sensoren aus einer Gruppe stammen, die zumindest kapazitive Sensoren (65,66,68), induktive Sensoren (64) und photometrische Sensoren (70,94) umfasst.

15. Verfahren nach einem der vorhergehenden Ansprüche 9 bis 14, **dadurch gekennzeichnet, dass** mindestens ein Messsignal eines Sensors (64,65,66,68,70 92) durch die Auswertung mindestens eines weiteren Messsignals optimiert wird.

## Claims

1. Hand-held photometric measuring device for locating objects enclosed in a medium, having at least one photometric sensor (92, 70) integrated in a housing of the measuring device, which obtains a first measurement signal of the object to be investigated by means of the at least one photometric sensor (92, 70), with the result that information relating to an object enclosed in the medium is obtained by evaluating this measurement signal, **characterized in that** at least one further sensor (64, 66, 68) for generating at least one further, second measurement signal for obtaining information relating to the object enclosed in the medium is provided in the housing of the measuring device, wherein a displacement sensor system of the measuring device makes it possible to capture signal profiles of measurement signals and to reproduce 2-dim representations, in which an item of depth information is also represented in addition to an item of displacement information, on a display of the measuring device.

2. Measuring device according to Claim 1, **characterized in that** the at least one photometric sensor (92, 70) is an infrared sensor (70).

3. Measuring device according to Claim 1 or 2, **characterized in that** the at least one further sensor is a radar sensor (60).

4. Measuring device according to Claim 3, **characterized in that** the radar sensor (60) is a broadband sensor of a pulse radar.

5. Measuring device according to Claim 1 or 2, **characterized in that** the at least one further sensor is an inductive sensor (64).

6. Measuring device according to Claim 1 or 2, **characterized in that** the at least one further sensor is a capacitive sensor (65, 66, 68).

7. Measuring device according to Claim 6, **characterized in that** the at least one further capacitive sensor (65, 66, 68) is a capacitive high-frequency sensor (68) which obtains information relating to objects enclosed in the medium by measuring an impedance of its electrodes.

8. Measuring device according to Claim 1, **characterized in that** at least two of the sensors (60, 64, 66, 68, 70, 92) are arranged on a common printed circuit board (18).

9. Method for locating objects enclosed in a medium using the measuring device from Claim 1, in which a measurement signal is generated using at least one photometric sensor (92, 70), in particular an infrared sensor (70), with the result that information relating to an object enclosed in the medium is obtained by evaluating this first measurement signal, and at least one further, second measurement signal is evaluated in order to obtain information relating to the object enclosed in the medium, **characterized in that**, in order to obtain information relating to the object enclosed in the medium, the measurement signal from a displacement sensor system is evaluated in order to capture signal profiles of measurement signals and to reproduce 2-dim representations, in which an item of depth information is also represented in addition to an item of displacement information.

10. Method according to Claim 9, **characterized in that** the at least one further measurement signal is generated by at least one further sensor apparatus (64, 65, 66, 68).

11. Method according to Claim 9 or 10, **characterized in that** the at least one first measurement signal and the at least one second measurement signal are measured in a parallel manner.

12. Method according to Claim 9 or 10, **characterized in that** the at least one first measurement signal and the at least one second measurement signal are measured in a quasi-parallel manner.

13. Method according to Claim 9 or 10, **characterized in that** the at least one first measurement signal and the at least one second measurement signal are measured in a serial manner.

14. Method according to one of the preceding Claims 9 to 13, in particular according to Claim 9, **characterized in that** the measurement signals from a plurality of sensors (64, 65, 66, 68) are measured and evaluated, wherein the sensors come from a group comprising at least capacitive sensors (65, 66, 68), inductive sensors (64) and photometric sensors (70, 94) .

15. Method according to one of the preceding Claims 9 to 14, **characterized in that** at least one measurement signal from a sensor (64, 65, 66, 68, 70, 92) is optimized by evaluating at least one further measurement signal.

## Revendications

1. Instrument de mesure photométrique portatif, destiné à localiser des objets enfermés dans un milieu, pourvu d'au moins un capteur photométrique (92, 70), intégré dans un boîtier de l'instrument de mesure, qui au moyen de l'au moins un capteur photométrique (92, 70) acquiert un premier signal de mesure de l'objet à analyser, de sorte que par l'évaluation dudit signal de mesure, des informations sur un objet enfermé dans le milieu soient acquises, **caractérisé en ce qu'**au moins un capteur supplémentaire (64, 66, 68) est prévu dans le boîtier de l'instrument de mesure, pour générer au moins un deuxième signal de mesure supplémentaire destiné à acquérir des informations concernant l'objet enfermé dans le milieu, un capteur de distance de l'instrument de mesure permettant de détecter des courbes de signaux de signaux de mesure et de reproduire dans un écran de l'instrument de mesure des représentations en 2 dimensions sur lesquelles, à côté d'une information de trajet, est également représentée une information de profondeur.

2. Instrument de mesure selon la revendication 1, **caractérisé en ce que** l'au moins un capteur photométrique (92, 70) est un capteur à infra-rouges (70) .

3. Instrument de mesure selon la revendication 1 ou 2, **caractérisé en ce que** l'au moins un capteur supplémentaire est un capteur de radar (60).

4. Instrument de mesure selon la revendication 3, **caractérisé en ce que** le capteur de radar (60) est un capteur à large bande d'un radar à impulsions.

5. Instrument de mesure selon la revendication 1 ou 2, **caractérisé en ce que** l'au moins un capteur supplémentaire est un capteur inductif (64).

6. Instrument de mesure selon la revendication 1 ou 2, **caractérisé en ce que** l'au moins un capteur supplémentaire est un capteur capacitif (65, 66, 68) .

7. Instrument de mesure selon la revendication 6, **caractérisé en ce que** l'au moins un capteur capacitif supplémentaire (65, 66, 68) est un capteur capacitif haute fréquence (68), qui par mesure d'une impédance de ses électrodes, acquiert des informations sur des objets enfermés dans le milieu.

8. Instrument de mesure selon la revendication 1, **caractérisé en ce qu'**au moins deux des capteurs (60, 64, 66, 68, 70, 92) sont placés sur une carte de circuit imprimé (18) commune.

9. Procédé, destiné à localiser des objets enfermés dans un milieu, à l'aide de l'instrument de mesure selon la revendication 1, lors duquel au moyen d'au moins un capteur photométrique (92, 70), notamment d'un capteur à infra-rouges (70), il est généré un signal de mesure, de sorte que par l'évaluation dudit premier signal de mesure, des informations sur un objet enfermé dans le milieu soient acquises et au moins un deuxième signal de mesure supplémentaire, pour acquérir des informations sur l'objet enfermé dans le milieu est évalué, **caractérisé en ce que** pour acquérir des informations sur l'objet enfermé dans le milieu, le signal de mesure d'un capteur de distance est évalué, pour détecter des courbes de signaux de signaux de mesure et pour reproduire des représentations en 2 dimensions sur lesquelles, à côté d'une information de trajet, est représentée également une information de profondeur.

10. Procédé selon la revendication 9, **caractérisé en ce que** l'au moins un signal de mesure supplémentaire est généré par au moins un dispositif de capteurs (64, 65 66, 68) supplémentaire.

11. Procédé selon la revendication 9 ou 10, **caractérisé en ce que** l'au moins un premier signal de mesure et l'au moins un deuxième signal de mesure sont mesurés en parallèle.

12. Procédé selon la revendication 9 ou 10, **caractérisé en ce que** l'au moins un premier signal de mesure et l'au moins un deuxième signal de mesure sont mesurés en quasi-parallèle.

13. Procédé selon la revendication 9 ou 10, **caractérisé en ce que** l'au moins un premier signal de mesure et l'au moins un deuxième signal de mesure sont mesurés en série.

14. Procédé selon l'une quelconque des revendications 9 à 13 précédentes, notamment selon la revendication 9, **caractérisé en ce que** les signaux de mesure d'une pluralité de capteurs (64, 65, 66, 68) sont mesurés et évalués, les capteurs provenant d'un groupe qui comprend au moins des capteurs capacitifs (65, 66, 68), des capteurs inductifs (64) et des capteurs photométriques (70, 94).

15. Procédé selon l'une quelconque des revendications 9 à 14 précédentes, **caractérisé en ce qu'**au moins un signal de mesure d'un capteur (64, 65, 66, 68, 70, 92) est optimisé par l'évaluation d'au moins un signal de mesure supplémentaire.
